# EUROPEAN PATENT SPECIFICATION

(11) **EP 0 570 471 B1**
(45) Date of publication and mention of the grant of the patent: **03.05.1995**
(21) Application number: 92904954.2
(22) Date of filing: 07.02.1992
(51) Int. Cl.: G01N 21/77

(54) **A MEASURING METHOD AND AN APPARATUS FOR CARRYING OUT THE METHOD**
MESSMETHODE UND APPARAT ZU DEREN DURCHFÜHRUNG
METHODE ET APPAREIL DE MESURE

(30) Priority: 07.02.1991 DK 209/91
(43) Date of publication of application: 24.11.1993
(73) Proprietor: NOVO NORDISK A/S, 2880 Bagsvaerd (DK)
(72) Inventor: SAUGMANN, Grethe, DK-4400 Kalundborg (DK); POULSEN, Johannes, DK-3520 Farum (DK); BOVING, Bjarne, DK-3450 Alleroed (DK); NIELSEN, Mads, Christian, Hage, DK-2200 Copenhagen N (DK)
(74) Representative: Hansen, Einar Tronier
(86) International application number: DK9200040
(87) International publication number: WO9214141

(56) References cited:
- EP-A- 0 092 246
- EP-A- 0 258 862
- EP-A- 0 272 407
- DE-A- 3 729 189
- US-A- 4 489 164
- US-A- 4 586 389
- US-A- 4 766 080

## Description

The invention relates to measuring the presence of traces of undesirable substances in air.

For environmental reasons many substances are undesirable in the air which people have to breath or stay in by working. Such substances may e.g. be toxic or allergenic or in other ways injurious to the health. Consequently, the legal levels of the presence of such substances are set extremely low making it difficult even to check if these levels are exceeded.

According to a known method for checking the content of noxious substances in the air a stationary device is used sucking through a filter a considerable amount of the air to be checked. After some time the filter may be replaced by a new one and the dust collected on the first mentioned filter may be analyzed for undesirable substances. When the amount of air pumped through the filter is known the analysis may reveal an average of the content of noxious substances during the time the filter has been used. This will give no safe indication of whether the legal level has been heavily exceeded for a short time, but well obeyed for most of the time.

The above solution only allows the air at a certain locality to be checked. In fact the solution needed has to check the air surrounding a working person wherever he goes and for this purpose US 4,586,389 suggests a portable aerosol dust spectrometer comprising a powerful pump for sucking in about 10 l of air per minute. The dust in the air is sorted according to grain size and deposited on sticky drums driven by a clock work. This makes it possible to analyze how the dust load has been through the day.

However, what is wished for is a measuring method and a device not only allowing the device to be carried by the working person but also to immediately analyze the air sample sucked in by the device thereby allowing an immediate alarm if the legal level is exceeded.

It is the object of the invention to provide a method for practically continuously measuring very small amounts of a given substance in the air. Further, the object is to provide a portable apparatus for carrying out this method.

The method according to the invention comprises the steps mentioned in claim 1. A sample of the air body to be checked is led through the substrate causing a change in the opacity of this substrate and the development of this opacity is detected. This provides a practically continuous monitoring of the opacity and consequently of the substance load as the flow of the air sample must only be stopped for a short time to prevent air bubbles from impairing the opacity measurement.

The extreme high sensibility of this method further enables that the air flow is held as low as about 0.3 l per minute. This enhances the portability as this lower air flow not only allows smaller dimensions of the air passages, but also a smaller pump capacity and consequently a smaller power supply.

If a substrate is used which reacts catalytically with the substance changing its opacity at a rate proportional to the amount of substance a still more sensitive method of measuring is obtained as an amount of substance which would not be able to immediately change the opacity to a measurable extent by working catalytically will on a long view cause a measurable opacity.

Using a substrate reacting catalytically with the substance, the opacity development rate must be measured to decide on possible increase in this rate from one time interval to another, an increase indicating that more of the substance has been added to the substrate. The opacity development rate may be detected by differentiation of the opacity/time-function. The first derivative will indicate the cumulative substance load and the second derivative will indicate the immediate substance load, i.e. the substance load during the last time interval. Using Suc-Ala-Ala-Pro-Phe-p-Nitroanilid as the substrate the method may be used for detecting traces of protease in the air.

An apparatus for carrying out the method may be designed as stated in claim 4. To make it portable such an apparatus must be miniaturized and at least the cuvette with the air intake must be placed practically on the spot where the sample of the air body is taken to prevent that substance is sedimented in tubings before it reaches the substrate in the cuvette.

As a part of the miniaturization the inlet tube may constitute an electrode of a capacitive level monitor, the inner wall of the cuvette holding housing constituting the other electrode.

The cuvette may be upwards closed by a hydrophobic filter, through which filter air is sucked from the upper part of the cuvette. This filter prevents aerosol generated by the air bubbling through the substrate from leaving the cuvette.

A lens and a filter may be mounted in front of the photometer diode, the lens to unify the light passing through the cuvette, and the filter to ensure that only the wave length at which the opacity changes is most well defined is taken into consideration whereby opacity contribution from other reactions are eliminated.

To prevent moisture from evaporated substrate from damaging the air flow monitor, which is inserted in the air passage receiving the air leaving the cuvette, a moisture absorber may be inserted in the air passage between the cuvette and the flow monitor.

The portability is enhanced by the fact that the power supply, the pump, and the computer may be separated from the rest of the apparatus being connected to this rest of the apparatus through cables and tubings. A special waistcoat with pockets and belts to carry the individual parts of the apparatus may be manufactured.

In the following the invention is described in further details with reference to the drawings, wherein
- figure 1: shows schematically the construction of an apparatus according to the invention, and
- figure 2: shows a sectional view of a commercial, integrated construction of the apparatus.

The apparatus schematically shown comprises a housing 1 holding a cuvette with a chamber 2 in which a substrate 3 is filled to the level 4. The chamber 2 is at its top provided with a cover 5 sealed to the cuvette body by an O-ring 6. Secured to the cover 5 is a tube 7 which extends along the longitudinal axis of the chamber 2 when the cover 5 is mounted on the housing 1. The tube 7 at its upper end has an inlet 28 opening into the surrounding air body, which should be checked, and is at its lower end provided with a nozzle 8 through which air sucked through the tube 7 emits and bubbles through the substrate 3.

The suction of air through the tube 7 is obtained by providing a vacuum in the chamber 2 above the substrate. This vacuum is obtained by sucking air from the chamber through a suction nipple 9 in a closing plate 10 sealed to the cover 5 by another O-ring 11 with a hydrophobic filter 12 placed between the suction nipple 9 and the top of the chamber 2 which filter having a pore diameter of e.g. 0.5 » should prevent aerosol formed when air bubbles through the substrate from being entrained by the air out of the cuvette. Drops caught by the filter will at least when the pump is stopped drop into the funnel 25 and flow back into the cuvette.

The suction is provided by a pump 13 which may be placed separated from the measuring part of the apparatus and be connected to this part by a tubing 14 which by a snap coupling 15 may be coupled to the measuring part. In the measuring part the air is sucked through a flow monitoring device having an inlet nipple 16 and an outlet nipple 17, the first for being connected to the nipple 9 at the top of the cuvette, and the other for being connected to the snap coupling 15 and consequently to the suction side of the pump 13.

The flow monitoring device comprising a pair of sensors 30 in the air passage and an computer interface 29 is designed to control the pump motor to provide a constant air flow through the apparatus, or it may monitor the actual flow so that variations may be compensated for when the substance load is calculated.

As mentioned, the inlet nipple 16 of the air flow monitor is connected to nipple 8 at the top of the cuvette. As the air leaving the cuvette is saturated with moisture due to the fact that the air has been bubbled through the substrate, this moisture is removed by establishing the connection through a vessel 18 with a moisture absorbing agent e.g. silica gel.

A spectrophotometer lamp 19 at one side of the cuvette chamber 2 lights through the substrate and the light passing the substrate is measured by a photo-diode 20 placed on the opposite side of the chamber opposite the lamp 19. A lens 21 is provided in front of the photo-diode 20 to unify the light and a filter 22 is inserted between the lens 21 and the photo-diode 20 to selectively provide a measuring of the light wave length at which the opacity is chiefly influenced.

Further, a temperature sensor 23 is provided to monitor the temperature of the substrate making it possible to take into account the fact that the reaction in the substrate is temperature dependent. Similarly, the level of the substrate is currently monitored as the opacity of the substrate will vary when it becomes more concentrated due to evaporation when air is bubbled through it. Signals from the temperature and level monitors and from the photo-diode are led to a computer interface 24. A not shown computer may perform all necessary calculations on the basis of signals obtained from the different measuring and monitoring devices. Further, the computer may store calculated data in preparation of a later read out of such data.

When being used the measuring part of the apparatus, the pump, the computer, and the power supply may be carried in different pockets or clipped to belts to distribute the weight over the body of the carrying person, the measuring part being connected to the suction side of the pump 13 by a tubing 14 and to the power supply and the computer by a cable 26 connected to the measuring part by a plug 27.

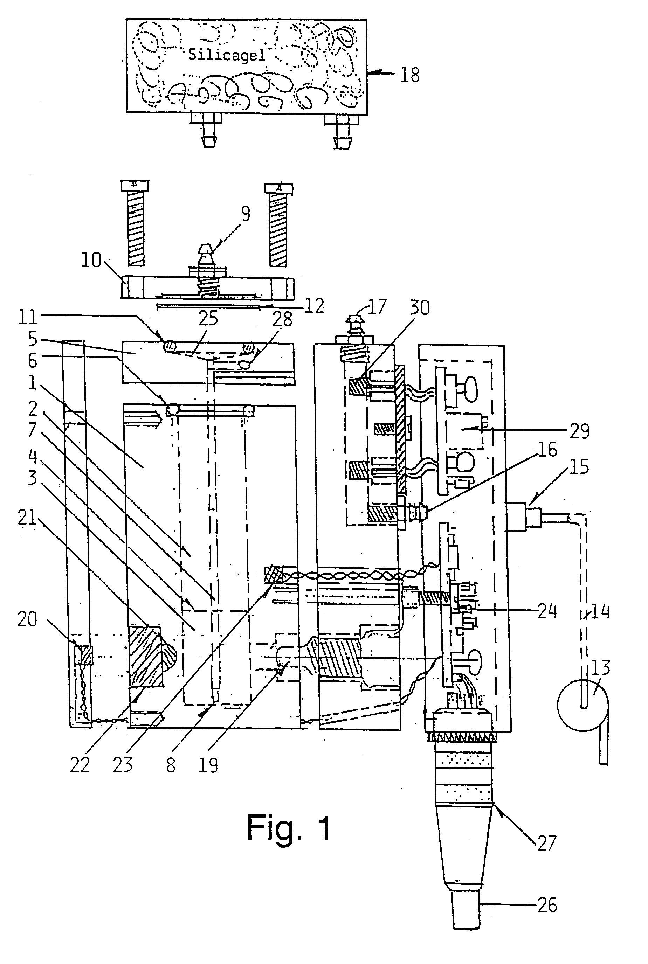

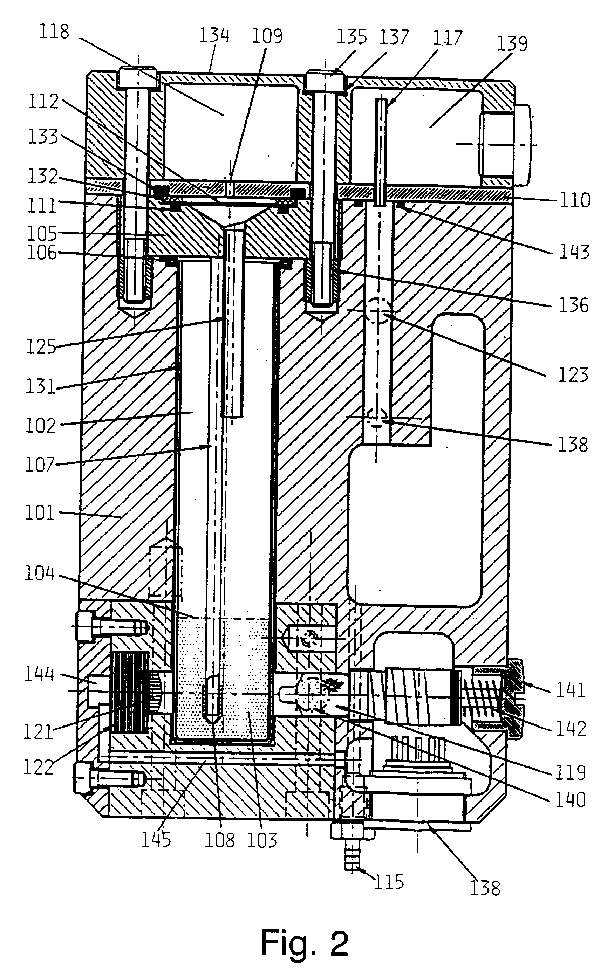

In figure 2 parts corresponding to parts in figure 1 carry the same references only with the prefix "1".

The housing 101 accommodates a cuvette 131 forming a chamber 102 into which a substrate 103 is filled to a level 104.

A cover 105 is sealed to the cuvette 131 by an O-ring 106. A tube 107 extends longitudinally in the chamber 102 with its lower end immersed into the substrate 103. This lower end is provided with a nozzle 108 whereas the other not visible end of the tube 107 forms an inlet for the air to be checked.

The vessel containing silicagel is integrated as a chamber 118 in a lid 134. Thereby the nipple 9 in figure 1 may be replaced by an opening 109 in a closing plate 110, which is sealed to the cover 105. This sealing is obtained by a silicone O-ring 111 forming a sealing between the cover 105 and a hydrophobic filter 112, which filter by a teflon ring 132 is held in abutment with the upper side of the O-ring 111. A silicone gasket 133 in a recess in the closing plate 110 seals against the teflon ring 132 and the cover 105. Liquid detained by the hydrophobic filter 112 is lead back into the cuvette by a funnel having a spout 125 depending from the cover 105 into the cuvette.

The lid 134 is secured to the housing 101 by screws screwed into a threaded bushing 136 in the housing 101 and a spring washer 137 is provided beneath the head 135 of the screw.

Air is sucked through the apparatus by a not shown pump which by a not shown tubing is coupled to a nipple 115 placed adjacent to a socket 138 to which an electric cable may be coupled by a plug corresponding to the plug 27 in figure 1. An inlet tube 117 to a flow monitor 138, which monitor is just indicated and not shown in details as in figure 1, is mounted in the closing plate 110 and opens into another chamber 139 in the lid 134. The chamber 134 communicates through a not shown duct with the chamber 118. A sealing O-ring 143 surrounding the inlet tube 117 is provided between the closing plate 110 and the housing 101.

The photometer part comprises a spectrophotometer lamp 119 at one side of the cuvette 131 and a photodiode opposite the lamp at the other side of the cuvette 131. A lens 121 and a filter 122 are mounted in front of the not shown photodiode, which may be mounted in a chamber 144 with its electric leads passed through a duct 145 to the inner ends of electric terminals in the socket 138.

Adjacent to the lamp 119 a reference light sensor 140 is mounted to monitor the light output from the lamp to make the computer compensate for reduced light output or to make an indication that the lamp has burned out and has to be replaced. Such replacement may easily be made by unscrewing a plug 141 behind the lamp, removing the lamp, and replacing it by a new one which is pressed into position by a spring 142 when the plug is again screwed into the housing.

As appears, the electric components and their lead connections are not shown in figure 2, but their positions are indicated. In this way is indicated a temperature sensor 123 measuring the temperature of the housing, which temperature as a result of the excellent heat conductivity of this housing corresponds to the temperature of the substrate 103.

The cuvette chamber 2 is filled to a predetermined level with a substrate reacting with the substance, the presence of which should be checked for by making this substrate coloured or more opaque. A substrate is chosen which reacts catalytically with the substance, i.e. the rate of colouring and not the total colouring is proportional to the amount of the substance, or put in another way, when a particle of the substance enters the substrate this will not cause a defined colouring of this substrate corresponding to the amount of substance in the particle, but it will start a colouring of the substrate which colouring will be intensified until the substrate has reached its maximal colouring, the rate at which this colouring is intensified being proportional to the amount of substance. This way a particle of the substance how small it ever is will cause a colouring of the substrate making this method of measuring extremely sensitive.

In principle, the apparatus performs a continuous checking of the air, but for practical reasons it is necessary to stop the pump at intervals to provide a measuring as the bubbles would disturb the function of the spectrophotometer measuring. Comparing the progress of the colouring in one time interval with the progress during the preceding interval it is possible to decide whether a new substance has been added to the substrate as the progress of the colouring will then be quicker. If a graph of the opacity as a function of time is plotted, it will be constituted by pieces of lines, the slopes of which indicate the total amount of substance in the substrate, and a change in slope indicates the addition of further substance. Consequently, the second derivative of the opacity/time graph expresses the immediate load of substance in the air checked.

The above consideration is valid for a constant amount of substrate in the cuvette having a fixed temperature. As mentioned, the liquid of the substrate will evaporate and leave the cuvette with the air and consequently the substrate will become more dense and for this reason the opacity will increase. By constantly monitoring the level of the substrate the level signals from the level monitor may make the computer compensate for variations in opacity caused by the enrichment of the substrate. Correspondingly, the computer may receive a temperature signal to compensate for the fact that the reaction rate varies with the temperature.This way the computer may currently calculate the concentration of substance, e.g. enzymes in the air bubbling through the cuvette chamber.

The apparatus may now be equipped with different alarms. To make the apparatus fulfil its purpose, an alarm may indicate that the substance load of the air is higher than accepted, this being indicated by the second derivative of the opacity/time function exceeding a preset value.

However, it is important to provide other alarms which indicate malfunctions of the apparatus. Such malfunctions may be that the flow control cannot establish the wanted flow, that the substrate in the cuvette has achieved its maximal colouring, that the substrate level is too low, that the batteries are almost discharged, that the photometer lamp is burned out, or that the reaction speed in the substrate has reached its maximum.

Signals which the computer may interpret as indications of malfunctions may be obtained from different sensors. Obviously the signal from the level monitor may indicate if the level is too low. Correspondingly, the signal from the photo-diode may indicate whether the substrate has become too opaque, or whether the lamp is burned out. The pump controlling circuit reaching the limits of its control field will indicate air flow failure and a voltage monitor may indicate whether the batteries are almost discharged. When the reaction speed has reached its known maximum it may be indicated by the first derivative of the opacity/time graph reaching its maximum.

## Claims

1. A method for currently measuring the presence of traces of an undesirable substance in air, comprising the steps,
a. providing in a cuvette a known amount of a substrate reacting catalytically with the substance changing its opacity at a rate proportional to the amount of the substance,
b. measuring the temperature and the level of the substrate in the cuvette,
c. passing at a defined flow rate air from the air body to be checked through the substrate,
d. measuring at preset time intervals the opacity of the substrate,
e. comparing the opacity development during the latest time interval with the development of opacity during the preceding time interval,
f. calculating the opacity development rate to decide whether this rate taken with the compensation for variations in temperature and level of substrate has increased from one time interval to another. taking an increase in opacity development rate as indicating that more of the substance has been added to the substrate.

2. A method according to claim 1, **characterized** in, that the calculation of the opacity development rate is obtained by differensation of the compensated opacity/time function, taking the first derivative as an indication of the cumulative substance load, and the second derivative as an indication of the immediate substance load.

3. A method according to claim 1 or 2, **characterized** in, that the substrate is Suc-Ala-Ala-Pro-Phe-p-Nitroanilid in preparation of detecting protease.

4. A portable apparatus for carrying out the method according to claims 1 - 5, comprising a housing (1;101) holding a cuvette (131) containing an amount of the substrate (3;103) reacting catalytically with the substance changing the opacity development rate of this substrate (3;103), an inlet tube (7;107) leading from the air body to be checked to the near bottom of the cuvette (131), an air pump (13) sucking air from the upper end of the cuvette (131) through a flow rate monitor (29,30;138) controlling the pump (13) to provide a preset constant air flow through the device, a spectrophotometer lamp (19;119) and a photo-diode (20) placed opposite each other on opposite sides of the cuvette (131), a level monitor monitoring the level (4; 104) of the substrate in the cuvette (131), and a temperature monitor (23;123) monitoring the temperature of the substrate, a computer circuit (24) receiving signals from the photo-diode (20), the level monitor, and the temperature monitor (23;123) to calculate a temperature and level compensated indication of the opacity of the substrate (3;103).

5. An apparatus according to claim 4, **characterized** in, that the inlet tube constitutes an electrode of a capacitive level monitor, the inner wall of the housing (1;101) constituting the other electrode.

6. An apparatus according to claim 5 or 6, **characterized** in, that the cuvette (131) is upwards closed by a hydrophobe filter (12;112), through which filter air is sucked from the upper part of the cuvette.

7. An apparatus according to any of the claims 4 - 6, **characterized** in, that a lens (21;121) and a filter (22; 122) are mounted in front of the photo-diode (20).

8. An apparatus according to any of the claims 4 - 7, **characterized** in, that a moisture absorber (18;118) is inserted in the air passage between the cuvette (131) and the flow monitor (29,30;138).

9. An apparatus according to any of the claims 4 - 8, **characterized** in, that the power supply, the pump (13), and the computer are separated from the rest of the apparatus being connected to this rest of the apparatus through cables (26) and tubings (14).

## Patentansprüche

1. Ein Verfahren zur laufenden Messung des Vorhandenseins von Spuren in einer unerwünschten Substanz in Luft, welches die Schritte umfaßt
a. Bereitstellung einer bekannten Menge eines Substrats in einer Cuvette, das katalytisch mit der Substanz reagiert, die ihre Lichtundurchlässigkeit mit einer Geschwindigkeit ändert, die proportional ist zur Menge der Substanz,
b. Messen der Temperatur und des Niveaus des Substrats in der Cuvette,
c. Hindurchleiten von Luft mit einer definierten Durchflußrate aus dem zu untersuchenden Luftkörper durch das Substrat,
d. Messen der Lichtundurchlässigkeit des Substrats in vorgegebenen Zeitintervallen,
e. Vergleichen der Lichtundurchlässigkeitsentwicklung während des letzten Zeitintervalls mit der Entwicklung der Lichtundurchlässigkeit während des vorangehenden Zeitintervalls,
f. Berechnen der Lichtundurchlässigkeitsentwicklungsgeschwindigkeit, um zu entscheiden, ob diese Geschwindigkeit, zusammengenommen mit der Kompensation für Variationen in der Temperatur und dem Niveau des Substrats, von einem Zeitintervall zu einem anderen angestiegen ist, wobei ein Anstieg in der Lichtundurchlässigkeitsentwicklungsgeschwindigkeit als Anzeichen genommen wird, daß mehr von der Substanz zu dem Substrat hinzugefügt worden ist.

2. Ein Verfahren nach Anspruch 1, dadurch gekennzeichnet, daß die Berechnung der Lichtundurchlässigkeitsentwicklungsgeschwindigkeit durch Differentiation der kompensierten Lichtundurchlässigkeit/Zeit-Funktion erhalten wird, wobei die erste Ableitung als ein Anzeichen der kumulativen Substanzbeladung und die zweite Ableitung als ein Anzeichen der unmittelbaren Substanzbeladung genommen wird.

3. Ein Verfahren nach Anspruch 1 oder 2, dadurch gekennzeichnet, daß das Substrat Suc-Ala-Ala-Pro-Phe-p-Nitroanilid zur Vorbereitung des Nachweises von Protease ist.

4. Eine tragbare Vorrichtung zur Durchführung des Verfahrens nach den Ansprüchen 1-5, umfassend ein Gehäuse (1; 101), das eine Cuvette (131) haltert, die eine Menge des Substrats (3; 103) enthält, das katalytisch mit der Substanz reagiert, was die Lichtundurchlässigkeitsentwicklungsgeschwindigkeit dieses Substrats (3; 103) ändert, ein Einlaßrohr (7; 107), das vom zu Untersuchenden Luftkörper zu dem nahen Boden der Cuvette (131) führt, eine Luftpumpe (13), die Luft vom oberen Ende der Cuvette (131) durch eine Durchflußüberwachungseinrichtung (29, 30; 138) saugt, die die Pumpe (13) so steuert, daß ein vorgegebener konstanter Luftdurchfluß durch die Einrichtung bereitgestellt wird, eine Spektrophotometerlampe (19; 119) und eine Photodiode (20), die gegenüber voneinander auf gegenüberliegenden Enden der Cuvette (131) angeordnet sind, eine Niveauüberwachungseinrichtung, die das Niveau (4; 104) des Substrats in der Cuvette (131) überwacht, und eine Temperaturüberwachungseinrichtung (23; 123), die die Temperatur des Substrats überwacht, ein Computerschaltkreis (24), der Signale von der Photodiode (20), der Niveauüberwachungseinrichtung und der Temperaturüberwachungseinrichtung (23; 123) erhält, um eine temperatur- und niveaukompensierte Anzeige der Lichtundurchlässigkeit des Substrats (3; 103) zu berechnen.

5. Eine Vorrichtung nach Anspruch 4, dadurch gekennzeichnet, daß das Einlaßrohr eine Elektrode einer kapazitiven Niveauüberwachungseinrichtung darstellt, wobei die innere Wand des Gehäuses (1; 101) die andere Elektrode darstellt.

6. Eine Vorrichtung nach Anspruch 4 oder 5, dadurch gekennzeichnet, daß die Cuvette (131) nach oben hin von einem hydrophoben Filter (12; 112) abgeschlossen ist, wobei durch diesen Filter Luft vom oberen Teil der Cuvette angesaugt wird.

7. Eine Vorrichtung nach einem der Ansprüche 4 bis 6, dadurch gekennzeichnet, daß eine Linse (21; 121) und ein Filter (22; 122) vor der Photodiode (20) angeordnet sind.

8. Eine Vorrichtung nach einem der Ansprüche 4-7, dadurch gekennzeichnet, daß ein Feuchtigkeitsabsorber (18; 118) im Luftdurchlaß zwischen der Cuvette (131) und der Durchflußüberwachungseinrichtung (29, 30; 128) eingebaut ist.

9. Eine Vorrichtung nach einem der Ansprüche 4-8, dadurch gekennzeichnet, daß die Energieversorgung, die Pumpe (13) und der Computer vom Rest der Vorrichtung getrennt sind, wobei die mit diesem Rest der Vorrichtung durch Kabel (26) und Leitungen (14) verbunden sind.

## Revendications

1. Procédé pour mesurer en continu la présence d'éléments de trace d'une substance indésirable dans l'air, comprenant les étapes consistant à
a. prévoir dans une cuvette une quantité connue d'un substrat réagissant catalytiquement avec la substance changeant son opacité à une vitesse proportionnelle à la quantité de la substance,
b. mesurer la température et le niveau du substrat dans la cuvette,
c. passer à un débit défini l'air provenant du corps d'air à contrôler à travers le substrat,
d. mesurer à des intervalles de temps préétablis l'opacité du substrat,
e. comparer l'évolution de l'opacité pendant le dernier intervalle de temps avec le développement du l'opacité pendant l'intervalle de temps précédent,
f. calculer la vitesse de développement de l'opacité pour décider si cette vitesse, compte tenu des variations de température et du niveau de substrat, a augmenté d'un intervalle de temps à un autre, en prenant une augmentation de la vitesse de développement de l'opacité comme indicateur de l'addition supplémentaire de substance dans le substrat.

2. Procédé selon la revendication 1, caractérisé en ce que le calcul de la vitesse de développement de l'opacité est obtenu par différenciation de la fonction opacité/temps, en prenant la première dérivée comme indication de la charge de substance cumulée et la seconde dérivée comme indication de la charge de substance immédiate.

3. Procédé selon la revendication 1 ou 2, caractérisé en ce que le substrat est le Suc-Ala-Ala-Pro-Phe-p-nitroanilide en préparation pour la détection de protéase.

4. Appareil portable pour effectuer le procédé selon les revendications 1 - 5, comprenant un logement (1; 101) recevant une cuvette (131) contenant une quantité du substrat (3; 103) réagissant catalytiquement avec la substance modifiant la vitesse de développement de l'opacité de la substance (3; 103), un tube (7; 107) menant du corps d'air à contrôler jusqu'à proximité du fond de la cuvette (131), une pompe à air (13) aspirant l'air à partir de l'extrémité supérieure de la cuvette (131) à travers un moniteur de débit (29, 30; 138) commandant la pompe (13) pour fournir un débit d'air constant préétabli à travers le dispositif, un voyant de spectrophotomètre (19; 119) et une photodiode (20) placés en opposition sur les côtés en regard de la cuvette (131), un moniteur de niveau contrôlant le niveau (4; 104) du substrat dans la cuvette (131) et un moniteur de température (23; 123) contrôlant la température du substrat, un circuit d'ordinateur (24) recevant les signaux provenant de la photodiode (20), le moniteur de niveau et le moniteur de température (23; 123) pour calculer une température et l'indication compensée de niveau de l'opacité du substrat (3; 103).

5. Appareil selon la revendication 4, caractérisé en ce que le tube d'entrée constitue une électrode du moniteur de niveau capacitif, la paroi interne du logement (1; 101) constituant l'autre électrode.

6. Appareil selon la revendication 5 ou 6, caractérisé en ce que la cuvette (131) est fermée vers le haut par un filtre hydrophobe (12; 112) à travers lequel l'air de filtre est aspiré à partir de la partie supérieure de la cuvette.

7. Appareil selon l'une quelconque des revendications 4 - 6, caractérisé en ce qu'une lentille (21; 121) et un filtre (22; 122) sont montés devant la photodiode (20).

8. Appareil selon l'une quelconque des revendications 4 - 7, caractérisé en ce qu'un absorbeur d'humidité (18; 118) est introduit dans le passage d'air entre la cuvette (131) et le moniteur de débit (29, 30; 138).

9. Appareil selon l'une quelconque des revendications 4 - 8, caractérisé en ce que l'alimentation électrique, la pompe (13) et l'ordinateur sont séparés du reste de l'appareil et connectés à ce dernier par des câbles (26) et des tubes (14).
